# EUROPEAN PATENT SPECIFICATION

(11) **EP 1 540 220 B1**
(45) Date of publication and mention of the grant of the patent: **08.03.2006**
(21) Application number: 03766433.1
(22) Date of filing: 23.06.2003
(51) Int. Cl.: F16L 5/04, A62C 13/14, A62C 13/16, A62C 2/06

(54) **FIREPROOFED COVERS FOR CONDUIT FITTINGS**
FLAMMHEMMENDE ABDECKUNGEN FÜR LEITUNGSARMATUREN
REVETEMENTS IGNIFUGES POUR RACCORDS DE CONDUITS

(30) Priority: 02.08.2002 GB 0217901
(43) Date of publication of application: 15.06.2005
(73) Proprietor: ENVIRONMENTAL SEALS LIMITED, NR Dover, Kent CT15 7JG (GB)
(72) Inventor: WARD, Derek, Alfred Warcott Lodge, Dover, Kent CT15 5HR (GB)
(74) Representative: Fry, Alan Valentine
(86) International application number: PCT/GB2003/002684
(87) International publication number: WO 2004/013528

(56) References cited:
- EP-A- 1 046 412
- WO-A-97/04838
- GB-A- 2 277 871
- US-A- 5 456 050

## Description

This invention relates to fireproofed covers for conduit fittings for electrical cabling.

Electrical services which pass through fire walls or ceilings present potential fire hazards should PVC sleeved electrical cables be subjected to excessive heat caused by, for example, a fire occurring in a room or ceiling area through which the electrical services pass. Overheating of conduit fittings such as dry lining boxes through which electric cables pass and within which electrical connections are made, for example, for wall mounted sockets, can cause self ignition of the cables; also, conduit fittings subjected to excessive heat can rapidly deform thereby enabling high temperature gases and flames to reach the cables and cause fires to occur. Fire damage to conduit fittings also enables fire and smoke to pass from one room of a building to another thereby aiding the spread of fire within that building. These problems are of increased concern in the context of timber framed properties.

WO 97/04838 discloses a fire collar which is supported around a plastics material pipe extending through a bore in a wall. The fire collar comprises a cylindrical metal collar carrying a layer of intumescent material on its inner circumferential surface. A sleeve of fire resistant material is attached to the metal collar and extends within the collar and around the pipe. In the event of a fire the pipe melts. The intumescent material is constrained to expand radially inwardly and as it does so it pushes the fabric sleeve radially inwardly. The sleeve and the expanded intumescent material together form a physical barrier across the fire collar which blocks the bore.

US 5456050 discloses a sleeve configured to be assembled through a wall-breaching hole so as to prevent the passage of flame and smoke therethrough. The sleeve has a barrel with a fixedly secured flange on one end thereof. An intumescent sheet material is adhered to the inner and the outer surface of the barrel.

Our GB 2277871 discloses a container which comprises a casing and a door both formed of a non-flammable material (e.g. metal) and latch means for securing the door in a closed position. Both the casing and the door are lined with layers of an intumescent adhesive, a heat resistant thermal insulating material, and a intumescent strip. The fire resistant container may be used to protect filing cabinets from the effects of fire.

EP 1046412 discloses a pipe including a weakened section carrying or incorporating an intumescent material. The weakened section is used to ensure that a section of the pipe collapses upon exposure to fire, thus allowing the pipe to be sealed, for example by use of the intumescent material.

The use of fibrous pads coated with intumescent material adhered to one internal wall of a conduit fitting is known from our patent GB 2 247 997 A. The presence of such pads within a conduit fitting inhibits the spread of fire and smoke by intumescing completely to fill the fitting interior when subjected to temperature increases occasioned by fire. For timber framed properties particularly, there is an additional need to provide acoustic sound-proofing properties for conduit fittings.

Flexible expandable seals are known which comprise a preformed flexible cellular foam or sponge which has been impregnated with fire-retardant material. When subjected to temperatures of the order of 300-400°C such seals lose integrity thereby allowing flames to pass between the walls or other members between which the seal is positioned. Expandable seals are also known which comprise layers of sponge and intumescent sheets. The sponge content of these seals deteriorates at temperatures around 200°C while the sheets expand. Seal flexibility is therefore substantially lost.

Improved flexible preformed fire-retardant seals are disclosed in our co-pending Application PCT/GB01/00323. These seals comprise preformed flexible cellular fire-retardant foam or sponge coated firstly with a primer solution including a sealant and secondly with a flowable coating of a fire-retardant material. These seals offer enhanced fire protection and acoustic properties.

Hitherto such seals have been employed in block form for use within, for example, wall cavities. It has now surprisingly been established that the fire-retardant and acoustic protection properties of the described preformed flexible cellular foam or sponge can be retained even when relatively thin sheets of this material are produced.

It has also been established that sheets of ceramic paper or felt coated with a fluid intumescent have good fire-proofing and sound-deadening properties.

One object of this invention is to provide a fireproofed cover for conduit fittings such as dry lining boxes which can readily be positioned between adjoining plasterboard walls of timber framed properties.

In one aspect, the invention provides a cover for encompassing the closed sides of a conduit fitting, the cover comprising sheets of a fire-retardant sound-proofed material joined together to define a cover open on one of its sides and dimensioned to fit snugly about the external walls of an open-sided conduit fitting.

According to the present invention in another aspect, there is provided a cover for a conduit fitting which comprises sheets of preformed flexible cellular fire-retardant foam or sponge joined together by an intumescent adhesive to form a cover open on one of its sides and dimensioned to define a reasonably snug fit about the external walls of an open-sided conduit fitting, each sheet being coated firstly with a primer solution including a sealant and secondly with a flowable coating of a fire-retardant material, the primer solution operating to close the open pores of the said at least one surface and to provide a bond to which the fire-retardant coating can adhere.

All surfaces of the foam or sponge sheets may be coated.

The primer solution may comprise an aqueous solution of an acrylic copolymer which includes ammonium polyphosphate.

The fire-retardant coating may comprise a chlorinated vinyl copolymer system which includes a quantity of ammonium polyphosphate, zinc borate and/or magnesium and/or calcium carbonates.

The foam or sponge may comprise polyurethane or alternatively a silicone coated with a silane primer.

The primer solution may be allowed to dry before the fire-retardant material is applied. One or both coatings may be applied by brushing, rolling or spraying.

In use, the cover may be adhered to an internal surface of a wall of plasterboard or other material using an intumescent adhesive at a position opposite an opening made in an adjoining wall of plasterboard or other material which forms the other side of a wall cavity with cabling passing through one cover wall through suitably positioned openings; the required conduit fitting is then positioned snugly within the cover to enable a wall mounted plug, for example, to be wired into a ring main. Pads of intumescent containing material are positioned within the fitting before assembly within the cover.

As an alternative to sheets of preformed flexible cellular fire-retardant foam or sponge, covers in accordance with the invention may comprise sheets of ceramic paper or fireproofed felt coated with a fire-proofed material. Construction and installation of such covers is essentially as described above in relation to the cover produced from sheets of fire-retardant foam or sponge material.

In one example of a cover in accordance with the invention, sheets of polyurethane foam material impregnated with an aqueous solution of a fire-retardant material are coated with a solution of an acrylic copolymer system which includes ammonium polyphosphate. At temperatures in excess of 250°C to 300°C the ammonium polyphosphate forms phosphoric acid which reacts with the fire-retardant coating for the polyurethane sheets. This primer coating has a viscosity similar to that of water and acts to seal the open cells of the polyurethane foam. The primer coating therefore seals the exposed surfaces of the polyurethane sheets whilst retaining the flexibility characteristics of the sheets. The primer coating also provides a bond to which the subsequently applied fire retardant coating can adhere.

The surfaces of the sheets are then coated with one or more coatings of a chlorinated vinyl copolymer system which includes a quantity of ammonium polyphosphate, zinc borate and/or magnesium and/or calcium carbonates. The viscosity of this fire-retardant coating is more akin to an emulsion or paste.

The coatings may be applied by means of a brush, roller or spray. The primer coating not only seals the open pores of the polyurethane block but also, as mentioned previously, provides a primed surface to which the fire-retardant coating can adhere. The coated sheets retain their flexibility and the bond between the respective coatings is sufficient to prevent cracking or other damage to the surface during handling of the sheets.

In some instances it may be preferable to allow the primer coating to dry before the fire-retardant coating is applied.

Once dried, the sheets are cut to sizes which approximate to the dimensions of the walls of the conduit fitting to be covered. The edges of the sheets are then adhered together using an intumescent adhesive to define an open-sided cover of a shape which matches the fitting to be covered but dimensioned marginally larger to enable the fitting to fit snugly within the cover.

Following assembly, the cover is inserted through an opening in, say, a plasterboard cavity wall to which a wall socket or the like is to be mounted. If necessary, the cover can, because of its inherent flexibility, be folded or screwed up to pass through the opening. Before entry of the cover, the area of internal wall of the opposed plasterboard cavity wall opposite the opening is coated with a layer of intumescent adhesive to retain the cover in place between the opposed cavity wall surfaces. Openings or slots formed in the appropriate side of the cover enable electrical cabling to enter the cover interior. The required conduit fitting is then located within the cover.

Covers in accordance with the invention have enhanced sound-deadening properties which enable the covers to act as acoustic covers for conduit fittings.

In the event of fire, the intumescent contents of the cover, the adhesive and the pads located within the fitting expand to fill completely all spacings between the fitting and the adjoining wall surfaces and within the fitting itself to prevent the flow of fire or smoke between the adjoining rooms defined by the cavity wall.

It will be appreciated that the foregoing is merely exemplary of fire-retardant seals in accordance with the invention and that various modifications can readily be made thereto without departing from the true scope of the invention as set out in the appended claims.

## Claims

1. A cover for a conduit fitting **characterised in that** it comprises sheets of preformed flexible cellular fire-retardant foam or sponge joined together by an intumescent adhesive to form a cover open on one of its sides and dimensioned to define a reasonably snug fit about the external walls of an open-sided conduit fitting, each sheet being coated firstly with a primer solution including a sealant and secondly with a flowable coating of a fire-retardant material, the primer solution operating to close the open pores of the said at least one surface and to provide a bond to which the fire-retardant coating can adhere.

2. A cover as claimed in claim 1 wherein all surfaces of the foam or sponge sheets are coated.

3. A cover as claimed in claim 1 or claim 2 wherein the primer solution comprises an aqueous solution of an acrylic copolymer which includes ammonium polyphosphate.

4. A cover as claimed in any one of the preceding claims wherein the fire-retardant coating comprises a chlorinated vinyl copolymer system which includes a quantity of ammonium polyphosphate, zinc borate and/or magnesium and/or calcium carbonates.

5. A cover as claimed in any one of the preceding claims wherein the foam or sponge comprises polyurethane or a silicone coated with a silane primer.

## Patentansprüche

1. Abdeckung für eine Leitungsarmatur, **dadurch gekennzeichnet, dass** diese aus Schichten von vorgeformten, flexiblen, zellularen feuerhemmenden Schaumstoff oder Schwamm besteht, die durch einen intumeszenten Kleber miteinander verbunden sind, um eine Abdeckung zu schaffen, die auf einer Ihrer Seiten offen und so dimensioniert ist, dass ein zuverlässiger Paßsitz über den Außenwänden einer offenseitigen Leitungsarmatur definiert wird, wobei jede Schicht erstens mit einer ein Dichtungsmittel enthaltenden Grundierungsschicht und zweitens mit einem fließfähigen Überzug aus feuerhemmenden Material überzogen ist, wobei die Grundlerungslösung die offenen Poren der wenigstens einen Oberfläche schließt und eine Verbindung schafft, an der der feuerhemmende Überzug anhaften kann.

2. Abdeckung nach Anspruch 1 bei welcher sämtliche Oberflächen der aus Schaumstoff oder Schwamm bestehenden Schichten überzogen sind.

3. Abdeckung nach Anspruch 1 oder 2 bei welcher die Grundlerungslösung aus einer wässrigen Lösung aus einem Acrylmischpolymerisat besteht, das Ammoniumpolyphosphat enthält.

4. Abdeckung nach einem der vorherigen Ansprüche, bei welcher der feuerhemmende Überzug aus einem chlorierten Vinylmischpolymerisatsystem besteht, das einen Anteil von Ammonlumpolyphosphat, Zinkborat und/oder Magnersium- und/oder Kalziumkarbonat enthalt.

5. Abdeckung nach einem der vorherigen Anspüche bei welcher der Schaumstoff oder der Schwamm aus Polyurethan oder einem Silikon besteht, die mit einer Silangrundierung überzogen sind.

## Revendications

1. Un revêtement pour un raccord de conduit **caractérisé en ce qu'**il comprend des feuilles de mousse ou d'éponge préformées, ignifuges à structure cellulaire flexible, reliées ensemble par un adhésif intumescent pour former un revêtement ouvert à un de ses côtés et dimensionnées pour définir un ajustement raisonnable autour des parois externes du raccord de conduit ouvert au côté, chaque feuille étant enduite d'abord d'une solution de couche primaire comprenant une matière d'étanchéité et deuxièmement d'un enduit fluide d'une matière ignifuge, la solution de couche primaire fonctionnant pour fermer les pores ouverts de cette au moins une surface et pour créer un joint auquel le revêtement ignifuge peut adhérer.

2. Revêtement selon la revendication 1 dans lequel toutes les surfaces des feuilles de mousse ou d'éponge sont enduites.

3. Revêtement selon la revendication 1 ou la revendication 2 dans lequel la solution de couche primaire comprend une solution aqueuse d'un copolymère acrylique qui comporte du polyphosphate d'ammonium.

4. Revêtement selon l'une quelconque des revendications précédentes dans lequel le revêtement ignifuge comprend un système de copolymère vinylique chloré qui comprend une quantité de polyphosphate d'ammonium, borate de zinc et/ou des carbonates de magnésium et/ou de calcium.

5. Revêtement selon l'une quelconque des revendications précédentes dans lequel la mousse ou éponge comprend un polyuréthane ou un silicone enduit d'une couche primaire de silane.
